# EUROPEAN PATENT APPLICATION

(11) **EP 3 297 332 A1**
(43) Date of publication of application: **21.03.2018**
(21) Application number: 15892475.3
(22) Date of filing: 23.12.2015
(51) Int. Cl.: H04W 40/04

(54) **METHOD AND SYSTEM FOR TRANSMITTING DYNAMIC CONTROL PLANE SIGNALING OF VIRTUAL CELL**

(30) Priority: 15.05.2015 CN 201510249500
(71) Applicant: ZTE Corporation, Shenzhen, Guangdong 518057 (CN)
(72) Inventor: KE, Yazhu, Shenzhen, Guangdong 518057 (CN); CHENG, Xiang, Shenzhen, Guangdong 518057 (CN); DOU, Jianwu, Shenzhen, Guangdong 518057 (CN)
(74) Representative: Regimbeau
(86) International application number: PCT/CN2015/098452
(87) International publication number: WO 2016/184101

(57) **Abstract**

Provided are a method and system for transmitting dynamic control plane signaling of a virtual cell. The method includes: selecting, by a transmitting end, a base station from a base station set constituting the virtual cell as a channel through which a control plane signaling is transmitted; and transmitting, by the transmitting end, the control plane signaling to a receiving end via the selected base station.

## Description

### TECHNICAL FIELD

The present application relates to, but is not limited to, wireless communication technology.

### BACKGROUND

As the number of users of wireless communications grows, wireless communications have increasingly wider application scenarios. The rapid development of mobile Internet, Internet of Things and other service applications has become the main driving force in the development of the 5th generation wireless systems (5G). Hence high-speed data services and ubiquitous access needs are presenting an explosive growth. It is predicted that by 2020, the traffic volume will be 1000 times as large as the current traffic volume. On this basis, the capability of broadband wireless access networks needs to be improved to meet the service needs of future users.

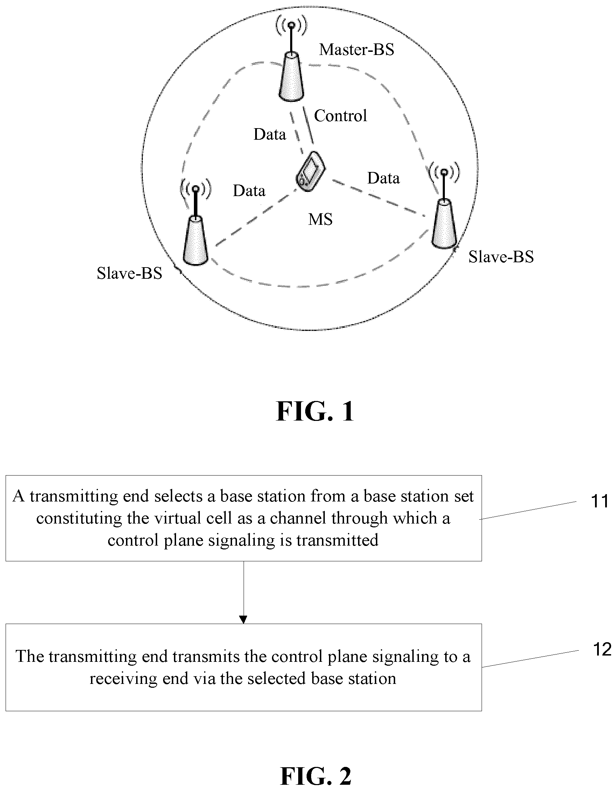

To meet the demand for broadband wireless access, the EU, China, Japan, the US and other countries have started researches on needs and key techniques of the 5th generation wireless systems. The main methods for improving network throughput include: enhancing the point-to-point link transmission rate and spreading spectrum resources and heterogeneous networks deployed at a high density. The heterogeneous networks deployed at a high density will support 20 to 30 times the size of the current traffic volume. In an ultra-dense network (UDN) environment, coverage areas of cells are reduced to improve the spatial multiplex ratio of spectrum resources. However, despite providing good link quality, a UDN small base station has a small coverage area and thereby cannot well support the rapid movement of a user. Thus new solutions are provided. For example, the concept of a virtual cell is proposed. In this user-centered concept, the virtual cell is built for the user dynamically. As illustrated in FIG. 1, the virtual cell is composed of three base stations (BSs), including a master base station (Master-BS) and two slave base stations (Slave-BSs). One mobile station (MS) is connected to all the three base stations to solve the problem where services are interrupted frequently and user experience is affected due to replacement of the base stations while the user is moving.

It can be seen from FIG. 1 that in the related art, control plane signaling is transmitted to the user from the master base station. However, the master base station is actually a small cell. To make the control plane signaling received by the user more reliably, it is often necessary to frequently replace the master base station to ensure that, from the perspective of the user, the master base station is connected to the user always through a best-quality channel. However, the frequent replacement of the master base station involves frequent synchronization of the control plane signaling and user plane data, detrimental to an L2 virtualization process.

### SUMMARY

The following is a summary of a subject matter described herein in detail. This summary is not intended to limit the scope of the claims.

Embodiments of the present disclosure provide a method and system for transmitting a dynamic control plane signaling in a virtual cell to solve the problem in the related art that a master base station changes frequently to make control plane signaling received reliably.

Embodiments of the present disclosure provide a method for transmitting dynamic control plane signaling of a virtual cell. The method includes that a transmitting end selects a base station from a base station set constituting the virtual cell as a channel through which a control plane signaling is transmitted and that the transmitting end transmits the control plane signaling to a receiving end via the selected base station.

Embodiments of the present disclosure further provide a system for transmitting dynamic control plane signaling in a virtual cell. The system includes a selection module configured to select a base station from a base station set constituting the virtual cell as a channel through which a control plane signaling is transmitted; and a transmitting module configured to transmit the control plane signaling to a receiving end via the selected base station.

Embodiments of the present disclosure further provide a computer-readable storage medium, which is configured to store computer-executable instructions for executing any method described above.

In embodiments of the present disclosure, a transmitting end selects a base station from a base station set constituting a virtual cell as a channel through which a control plane signaling is transmitted; and the transmitting end transmits the control plane signaling to a receiving end via the selected base station. When the control plane signaling is transmitted, the solution provided by embodiments of the present disclosure avoids frequent replacement of a master base station, ensures a reliable transmission of the control plane signaling between a network side and a user side. Therefore, the problem in control plane signaling data synchronization and service data synchronization between a source master base station and a target master base station due to the frequent replacement of the master base station is alleviated, and the backhaul transmission costs between base stations are reduced.

Other aspects can be understood after the accompanying drawings and detailed description are read and understood.

### BRIEF DESCRIPTION OF DRAWINGS

FIG. 1 is a schematic diagram of a virtual cell when ultra-dense cells are deployed in the related art.
FIG. 2 is a flowchart of a method for transmitting dynamic control plane signaling of a virtual cell according to an embodiment of the present disclosure.
FIG. 3 is a schematic diagram illustrating a protocol stack of a user plane for the transmission of signaling data between a master base station and a slave base station according to an embodiment of the present disclosure.
FIG. 4 is a schematic diagram illustrating transmission of downlink control plane signaling according to an embodiment of the present disclosure.
FIG. 5 is a schematic diagram illustrating transmission of downlink control plane signaling according to an embodiment of the present disclosure.
FIG. 6 is a schematic diagram illustrating transmission of uplink control plane signaling according to an embodiment of the present disclosure.
FIG. 7 is a schematic diagram illustrating transmission of uplink control plane signaling according to an embodiment of the present disclosure.
FIG. 8 is a schematic diagram of a system for transmitting dynamic control plane signaling in a virtual cell according to an embodiment of the present disclosure.

### DETAILED DESCRIPTION

Embodiments of the present disclosure will be described below in detail with reference to the accompanying drawings.

FIG. 2 is a flowchart of a method for transmitting dynamic control plane signaling in a virtual cell according to an embodiment of the present disclosure. As illustrated in FIG. 2, the method for transmitting the dynamic control plane signaling in the virtual cell according to the embodiment of the present disclosure includes steps described below.

In step 11, a transmitting end selects a base station from a base station set constituting the virtual cell as a channel through which a control plane signaling is transmitted.

In step 12, the transmitting end transmits the control plane signaling to a receiving end via the selected base station.

The step in which the transmitting end transmits the control plane signaling to the receiving end via the selected base station includes that the transmitting end transmits complete signaling data of an RRC message to the receiving end via the selected base station.

In an embodiment, the transmitting end is a master base station, and the receiving end is a user equipment.

In an embodiment, the transmitting end is a user equipment, and the receiving end is a master base station.

In the present embodiment, the base station set constituting the virtual cell includes a master base station and a slave base station which pre-establish a radio bearer for transmitting and receiving signaling data of an RRC message. A user plane of the master base station has protocol stacks including Packet Data Convergence Protocol (PDCP), Radio Link Control (RLC), Media Access Control (MAC) and Physical Layer (PHY). A user plane of the slave base station has protocol stacks including MAC and PHY.

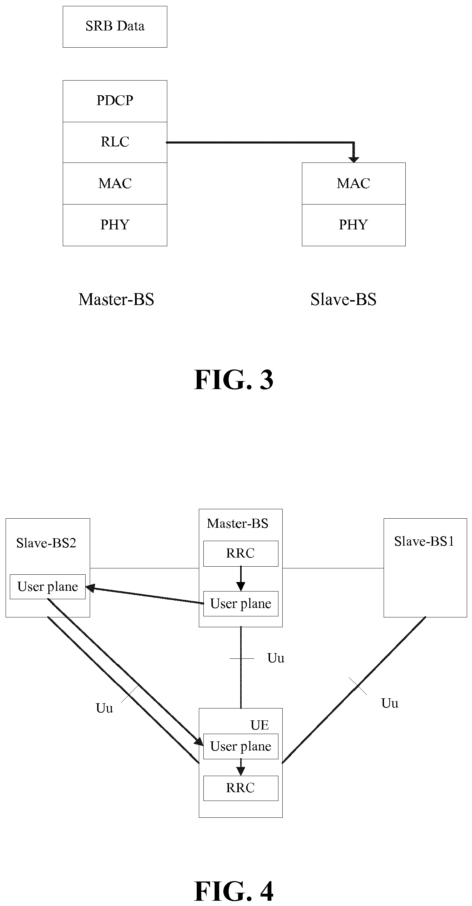

The transmitting end is, for example, a master base station (Master-BS), and the receiving end is, for example, a user equipment. As illustrated in FIG. 3, when a transmitting end selects a slave base station from a base station set constituting a virtual cell as a channel through which signaling data of an RRC message is transmitted, a step in which the transmitting end transmits control plane signaling to a receiving end via the selected base station includes that the transmitting end transmits an RLC protocol data unit (PDU) of a signal radio bearer (SRB) to the slave base station.

Moreover, in practical use, the transmitting end selects, for example according to quality on transmission of instructions by a base station and resource utilization, a proper base station from the base station set constituting the virtual cell as the channel through which the control plane signaling is transmitted.

FIG. 4 is a schematic diagram illustrating transmission of downlink control plane signaling according to an embodiment of the present disclosure. In the present embodiment, three base stations constitute a virtual cell for a user. A base station (BS) 1 is a master base station (Master-BS). A base station 2 and a base station 3 are slave base stations (Slave-BSs), and are referred to as a slave base station 1 (Slave-BS1) and a slave base station 2 (Slave-BS2), respectively. Directions of arrows in FIG. 4 indicate directions in which the downlink control plane signaling flows.

As illustrated in FIG. 4, a data transmission process of the downlink control plane signaling during a period from T1 to T2 includes steps as described below.

In step 101, the Master-BS builds an RRC message and selects from a base station set constituting the virtual cell the Slave-BS2 as a base station through which the RRC message is transmitted. A radio resource control (RRC) protocol stack of the Master-BS manages (including generating, modifying and deleting) the RRC message.

In step 102, an RRC layer of the Master-BS transmits the RRC message to a user plane of the Master-BS and informs the user plane of a target base station and/or a target cell to which the RRC message is to be transmitted.

In step 103, the user plane of the Master-BS transmits a signaling data PDU to a user plane of the Slave-BS2.

In step 104, after receiving the signaling data, the user plane of the Slave-BS2 transmits the signaling data to a user equipment (UE) through an air interface.

In step 105, after receiving the signaling data, a user plane of the UE transmits the signaling data to an RRC layer of the UE through the air interface.

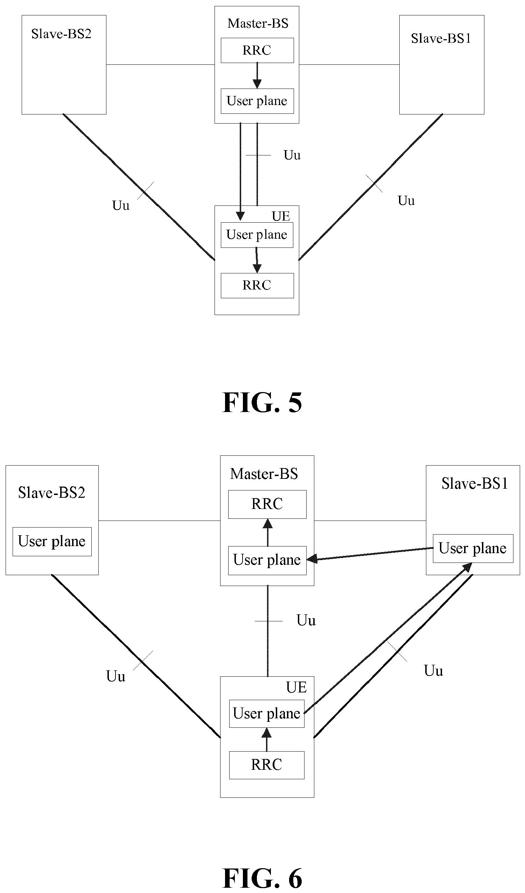

FIG. 5 is a schematic diagram illustrating transmission of downlink control plane signaling according to an embodiment of the present disclosure. In the present embodiment, three base stations constitute a virtual cell for a user. A base station 1 is a master base station (Master-BS). A base station 2 and a base station 3 are slave base stations, and are referred to as a slave base station 1 (Slave-BS1) and a slave base station 2 (Slave-BS2), respectively. Directions of arrows in FIG. 5 indicate directions in which the downlink control plane signaling flows.

As illustrated in FIG. 5, a data transmission process of the downlink control plane signaling during a period from T3 to T4 includes steps described below.

In step 201, the Master-BS builds an RRC message and selects from a base station set constituting the virtual cell the Master-BS itself as a base station through which the RRC message is transmitted. An RRC protocol of the Master-BS manages (including generating, modifying and deleting) the RRC message.

In step 202, an RRC layer of the Master-BS transmits the RRC message to a user plane of the Master-BS and informs the user plane of a target base station and/or a target cell to which the RRC message is to be transmitted.

In step 203, the user plane of the Master-BS transmits the signaling data to a UE through an air interface of the Master-BS.

In step 204, after receiving the signaling data, a user plane of the UE transmits the signaling data to an RRC layer of the UE through the air interface.

FIG. 6 is a schematic diagram illustrating transmission of uplink control plane signaling according to an embodiment of the present disclosure. In the present embodiment, three base stations constitute a virtual cell for a user. A base station 1 is a master base station (Master-BS). A base station 2 and a base station 3 are slave base stations, and are referred to as a slave base station 1 (Slave-BS1) and a slave base station 2 (Slave-BS2), respectively. Directions of arrows in FIG. 6 indicate directions in which the uplink control plane signaling flows.

As illustrated in FIG. 6, a data transmission process of the uplink control plane signaling during a period from Tu1 to Tu2 includes steps described below.

In step 301, an RRC layer of a UE builds an RRC message and selects from a base station set constituting the virtual cell the Slave-BS1 as a base station through which the RRC message is transmitted. An RRC protocol of the UE manages (including generating, modifying and deleting) the RRC message.

In step 302, the RRC layer of the UE transmits the RRC message to a user plane of the UE and inform the user plane of a target base station and/or a target cell to which the RRC message is to be transmitted.

In step 303, after receiving a signaling data PDU, the user plane of the UE transmits the signaling data to a user plane of the Slave-BS1 through an air interface.

In step 304, after receiving the signaling data, the user plane of the Slave-BS1 transmits the signaling data to a user plane of the Master-BS.

In step 305, after receiving the signaling data, the user plane of the Master-BS transmits the signaling data to an RRC layer of the Master-BS.

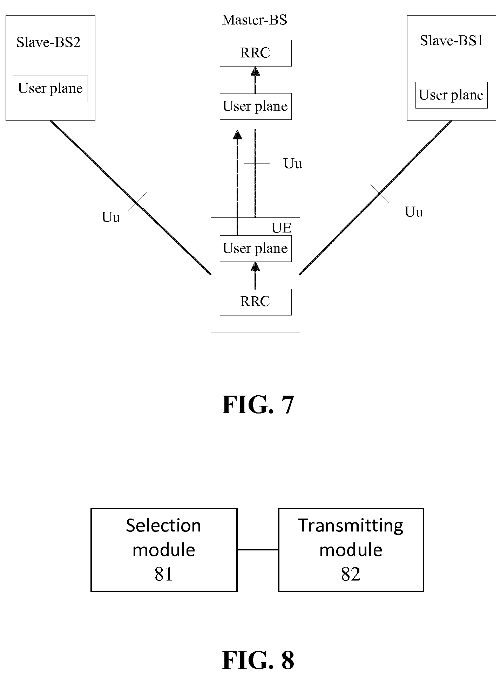

FIG. 7 is a schematic diagram illustrating transmission of uplink control plane signaling according to an embodiment of the present disclosure. In the present embodiment, three base stations constitute a virtual cell for a user. A base station 1 is a master base station (Master-BS). A base station 2 and a base station 3 are slave base stations, and are referred to as a slave base station 1 (Slave-BS1) and a slave base station 2 (Slave-BS2), respectively. Directions of arrows in FIG. 7 indicate directions in which the uplink control plane signaling flows.

As illustrated in FIG. 7, a data transmission process of the uplink control plane signaling during a period from Tu3 to Tu4 includes steps described below.

In step 401, an RRC layer of a UE builds an RRC message and selects from a base station set constituting the virtual cell the Master-BS as a base station through which the RRC message is transmitted. An RRC protocol of the UE manages (including generating, modifying and deleting) the RRC message.

In step 402, the RRC layer of the UE transmits the RRC message to a user plane of the UE and informs the user plane of a target base station and/or a target cell to which the RRC message is to be transmitted.

In step 403, the user plane of the UE transmits a signaling data PDU to the Master-BS through an air interface.

In step 404, after receiving the signaling data, the user plane of the Master-BS transmits the signaling data to an RRC layer of the Master-BS.

As illustrated in FIG. 8, embodiments of the present disclosure further provide a system for transmitting dynamic control plane signaling in a virtual cell. The system includes a selection module 81, which is configured to select a base station from a base station set constituting the virtual cell as a channel through which a control plane signaling is transmitted; and a transmitting module 82, which is configured to transmit the control plane signaling to a receiving end via the selected base station.

The selection module 81 and the transmitting module 82 are disposed on a transmitting end. The transmitting end is, for example, a master base station, and accordingly, the receiving end is, for example, a user equipment. Alternatively, the transmitting end is, for example, a user equipment, and accordingly, the receiving end is, for example, a master base station.

The transmitting module 82 is configured to transmit complete signaling data of an RRC message to the receiving end via the selected base station.

The base station set constituting the virtual cell includes a master base station and a slave base station which pre-establish a radio bearer for transmitting and receiving the signaling data of the RRC message. A user plane of the master base station has protocol stacks which include PDCP, RLC, MAC and PHY. A user plane of the slave base station has protocol stacks which include MAC and PHY.

Moreover, the processing procedure of the system is the same as that of the method described above, and thus will not be repeated herein.

It will be understood by those of ordinary skill in the art that all or part of the steps in the above-mentioned embodiments may be implemented using one or more computer programs. The computer programs may be stored in a computer readable storage medium and executed on a corresponding hardware platform (e.g., system, device, apparatus or component). During the execution of these programs, one of or a combination of the steps in the above-mentioned method embodiments is implemented.

Optionally, all or part of the steps in the above-mentioned embodiments may also be implemented using one or more integrated circuits. These steps may be made into integrated circuit modules separately, or part of these modules or steps may be made into a single integrated circuit module for implementation.

The various devices/function modules/function units in the above-mentioned embodiments may be implemented on a general-purpose computing device. They may be concentrated on a single computing device or distributed over a network composed of multiple computing devices.

The various devices/function modules/function units in the above-mentioned embodiments are implemented by software function modules, and can be stored in a computer-readable storage medium when sold or used as stand-alone products. The above-mentioned computer-readable storage medium may be a read-only memory, a magnetic disk or an optical disk, etc.

### INDUSTRIAL APPLICABILITY

When control plane signaling is transmitted, the solution provided by embodiments of the present disclosure avoids frequent replacement of a master base station, ensures a reliable transmission of the control plane signaling between a network side and a user side. Therefore, the problem in control plane signaling data synchronization and service data synchronization between a source master base station and a target master base station due to the frequent replacement of the master base station is alleviated, and the backhaul transmission costs between base stations are reduced.

## Claims

1. A method for transmitting dynamic control plane signaling in a virtual cell, comprising:
selecting, by a transmitting end, from a base station set constituting the virtual cell a base station as a channel through which a control plane signaling is transmitted; and
transmitting, by the transmitting end, the control plane signaling to a receiving end via the selected base station.

2. The method of claim 1, wherein transmitting, by the transmitting end, the control plane signaling to the receiving end via the selected base station comprises: transmitting, by the transmitting end, complete signaling data of a radio resource control (RRC) message to the receiving end via the selected base station.

3. The method of claim 1, wherein the base station set constituting the virtual cell comprises a master base station and a slave base station which pre-establish a radio bearer for transmitting and receiving signaling data of an RRC message.

4. The method of claim 3, wherein a user plane of the master base station has protocol stacks comprising Packet Data Convergence Protocol (PDCP), Radio Link Control (RLC), Media Access Control (MAC) and Physical Layer (PHY), and a user plane of the slave base station has protocol stacks comprising MAC and PHY.

5. The method of claim 1, wherein the transmitting end is a user equipment, and the receiving end is a master base station.

6. The method of claim 1, wherein the transmitting end is a master base station, and the receiving end is a user equipment.

7. The method of claim 6, wherein when the transmitting end selects a slave base station from the base station set constituting the virtual cell as a channel through which signaling data of an RRC message is transmitted, transmitting, by the transmitting end, the control plane signaling to the receiving end via the selected base station comprises: transmitting, by the transmitting end, an RLC protocol data unit (PDU) of a signal radio bearer (SRB) to the slave base station.

8. A system for transmitting dynamic control plane signaling in a virtual cell, comprising:
a selection module configured to select a base station from a base station set constituting the virtual cell as a channel through which a control plane signaling is transmitted; and
a transmitting module configured to transmit the control plane signaling to a receiving end via the selected base station.

9. The system of claim 8, wherein the transmitting module is configured to transmit complete signaling data of a radio resource control (RRC) message to the receiving end via the selected base station.

10. The system of claim 8, wherein the base station set constituting the virtual cell comprises a master base station and a slave base station which pre-establish a radio bearer for transmitting and receiving signaling data of an RRC message.

11. The system of claim 10, wherein a user plane of the master base station has protocol stacks comprising Packet Data Convergence Protocol (PDCP), Radio Link Control (RLC), Media Access Control (MAC) and Physical Layer (PHY), and a user plane of the slave base station has protocol stacks comprising MAC and PHY.

12. A computer-readable storage medium, which is configured to store computer-executable instructions for executing the method of any one of claims 1 to 7.
